# EUROPÄISCHE PATENTSCHRIFT

(11) **EP 3 833 514 B1**
(45) Veröffentlichungstag und Bekanntmachung des Hinweises auf die Patenterteilung: **21.09.2022**
(21) Anmeldenummer: 19749310.9
(22) Anmeldetag: 31.07.2019
(51) Int. Cl.: B25J 9/10, B25J 13/08, B25J 17/00, F16H 49/00, F16H 57/029, G01L 5/00

(54) **ROBOTERARM MIT WENIGSTENS EINEM GELENKMOMENTSENSOR**
ROBOT ARM WITH AT LEAST ONE JOINT TORQUE SENSOR
BRAS DE ROBOT MUNI D'AU MOINS UN CAPTEUR DE COUPLE D'ARTICULATION

(30) Priorität: 09.08.2018 DE 102018213452
(43) Veröffentlichungstag der Anmeldung: 16.06.2021
(73) Patentinhaber: KUKA Deutschland GmbH, 86165 Augsburg (DE)
(72) Erfinder: FÜRSTENBERGER, Matthias, 86391 Stadtbergen (DE); ZASCHE, Moritz, 87653 Eggenthal (DE); KOEGL, Bernhard, 86415 Mering (DE); KRUMBACHER, Rainer, 87675 Rettenbach (DE); MARQUART, Michael, 86179 Augsburg (DE)
(74) Vertreter: Oelke, Jochen
(86) Internationale Anmeldenummer: PCT/EP2019/070648
(87) Internationale Veröffentlichungsnummer: WO 2020/030498

(56) Entgegenhaltungen:
- EP-A2- 3 162 516
- JP-A- 2017 034 936
- KR-A- 20130 017 122

## Beschreibung

Die Erfindung betrifft einen Roboterarm, aufweisend mehrere Glieder und mehrere Gelenke, welche die Glieder gegeneinander verstellbar verbinden, wobei wenigstens ein nachgelagertes Glied mittels einer Hauptlageranordnung drehbar an einem vorgelagerten Glied gelagert ist, ein Getriebegehäuse eines jeweiligen Getriebes in dem betreffenden Gelenk an das vorgelagerte Glied angekoppelt ist und an eine Abtriebswelle des Getriebes ein Gelenkmomentsensor angeschlossen ist, der ausgebildet ist, ein Drehmoment abtriebsseitig zu erfassen, wobei der Gelenkmomentsensor einen Eingangsflansch, einen Ausgangsflansch und einen den Eingangsflansch mit dem Ausgangsflansch verbindenden Messabschnitt aufweist, an dem wenigstens ein Drehmomentsensor-Messelement angeordnet ist.

Beispielsweise aus der EP 1 353 159 B1 und der EP 1 503 196 A1 ist jeweils eine Vorrichtung bekannt, umfassend ein Getriebe mit Hohlrad, dem ein als Antrieb verwendeter Elektromotor zugeordnet ist. Ein Drehmomentsensor bildet dabei eine Einheit mit dem Hohlrad eines Harmonic-Drive-Getriebes oder eines Planetengetriebes. Der Drehmomentsensor ist in Form eines monolithischen scheibenförmigen Aufnahmeteils gebildet, bestehend aus einem kreisringförmigen Innenflansch mit ersten Krafteinleitungsstellen, aus einem kreisringförmigen Außenflansch mit zweiten Krafteinleitungsstellen und aus zwischen den beiden Flanschen ausgebildeten, radial verlaufenden Verbindungsstegen jeweils mit mechanisch geschwächtem Abschnitt, an welchem druck- oder dehnungsempfindliche, elektrische Ausgangssignale generierende Messwertaufnehmer vorgesehen sind. Die Messwertaufnehmer sind nach dem Prinzip einer Wheatstone-Brücke jeweils zu Viertel-, Halb- oder Voll-Brücken in der Weise geschaltet, dass ein Drehmoment ermittelbar ist, wobei das Aufnahmeteil eine zusammenhängende, gegliederte, plane Oberseite aufweist, und die mechanisch geschwächten Abschnitte der Verbindungsstege als unterseitige Ausnehmungen mit jeweils einem dünnen membranartigen Abschluss ausgebildet sind, wobei auf der planen flächigen Oberseite der membranartigen Abschlüsse die Messwertaufnehmer aufgebracht sind.

Aus der EP 3 162 516 A2 ist ein Robotersystem, bestehend aus einer Gelenkstruktur mit einem Drehmomentensensor bekannt.

Aus der JP 2017 034936 A ist eine Motorsteuerung bekannt.

Aus der KR 2013 0017122 A ist Roboter mit einem Drehmomentsensor bekannt, wobei ein Drehmomentsensor an jeder Achse angeordnet ist.

Aufgabe der Erfindung ist es, einen Roboterarm zu schaffen, bei dem die Bestimmung, insbesondere die Messung eines Gelenkmoments mittels wenigstens eines Gelenkmomentsensors verbessert ist, insbesondere genauer durchgeführt werden kann.

Diese Aufgabe wird erfindungsgemäß gelöst durch einen Roboterarm, aufweisend mehrere Glieder und mehrere Gelenke, welche die Glieder gegeneinander verstellbar verbinden, wobei wenigstens ein nachgelagertes Glied mittels einer Hauptlageranordnung drehbar an einem vorgelagerten Glied gelagert ist, ein Getriebegehäuse eines jeweiligen Getriebes in dem betreffenden Gelenk an das vorgelagerte Glied angekoppelt ist und an eine Abtriebswelle des Getriebes ein Gelenkmomentsensor angeschlossen ist, der ausgebildet ist, ein Drehmoment abtriebsseitig zu erfassen, wobei der Gelenkmomentsensor einen Eingangsflansch, einen Ausgangsflansch und einen den Eingangsflansch mit dem Ausgangsflansch verbindenden Messabschnitt aufweist, an dem wenigstens ein Drehmomentsensor-Messelement angeordnet ist, des Weiteren aufweisend eine getriebeabtriesseitige Gegenlauffläche, auf der eine das Getriebegehäuse schmiermitteldicht abdichtende dynamische Berührungsdichtung sitzt, wobei ein durch die Hauptlageranordnung bestimmter Spalt zwischen dem vorgelagerten Glied und dem nachgelagerten Glied, an das der Ausgangsflansch des Gelenkmomentsensors angekoppelt ist, mittels einer weiteren Dichtung abgedichtet ist.

Die erfindungsgemäßen Merkmale verfolgen insbesondere das Ziel, durch Optimierung der Kraftnebenflüsse die Genauigkeit der Momentenmessung zu erhöhen.

Im Allgemeinen kann die weitere Dichtung an einer beliebigen Stelle im Bereich des Getriebeabtriebs angeordnet sein. Von Bedeutung ist jedoch, dass die Anordnung der weiteren Dichtung so gewählt wird, dass die weitere Dichtung im Drehmomentenfluss vor dem wenigstens einen Drehmomentsensor-Messelement angeordnet ist, damit die weitere Dichtung keinen Kraftnebenfluss bildet, der die Messung durch das wenigstens eine Drehmomentsensor-Messelement abfälschen könnte.

Die Aufgabe wird im Speziellen gelöst durch einen Roboterarm, aufweisend mehrere Glieder und mehrere Gelenke, welche die Glieder gegeneinander verstellbar verbinden, wobei wenigstens ein nachgelagertes Glied mittels einer Hauptlageranordnung drehbar an einem vorgelagerten Glied gelagert ist, ein Getriebegehäuse eines jeweiligen Getriebes in dem betreffenden Gelenk an das vorgelagerte Glied angekoppelt ist und an eine Abtriebswelle des Getriebes ein Gelenkmomentsensor angeschlossen ist, der ausgebildet ist, ein Drehmoment abtriebsseitig zu erfassen, wobei der Gelenkmomentsensor einen Eingangsflansch, einen Ausgangsflansch und einen den Eingangsflansch mit dem Ausgangsflansch verbindenden Messabschnitt aufweist, an dem wenigstens ein Drehmomentsensor-Messelement angeordnet ist, des Weiteren aufweisend einen den Eingangsflansch des Gelenkmomentsensors an die Abtriebswelle des Getriebes ankoppelnden Kopplungsabschnitt, der eine Gegenlauffläche aufweist, auf der eine das Getriebegehäuse schmiermitteldicht abdichtende dynamische Berührungsdichtung sitzt, wobei ein durch die Hauptlageranordnung bestimmter Spalt zwischen dem vorgelagerten Glied und dem nachgelagerten Glied, an das der Ausgangsflansch des Gelenkmomentsensors angekoppelt ist, mittels der weiteren dynamischen, insbesondere berührungslosen Dichtung insbesondere staubdicht abgedichtet ist.

Bei Robotern und insbesondere bei sensitiven Robotern, d.h. nachgiebigkeits- oder steifigkeitsgeregelten Robotern, werden im Allgemeinen zur Messung von Abtriebsmomenten jeweils ein Drehmomentsensor bzw. Gelenkmomentsensor (GMS) in das betreffende Robotergelenk integriert, insbesondere zusammen mit einem Antriebsmotor, einem Getriebe und einer Hauptlagerung für das Gelenk. Der Gelenkmomentsensor wird dabei, abgesehen von allenfalls auftretenden sekundären Belastungsanteilen aufgrund von Verformungen der Hauptlagerung und Anbauteilen, ausschließlich mit einem Drehmoment belastet. Kippmomente und sonstige Kräfte werden über die Hauptlagerung übertragen. Die ausschließliche Drehmomentbelastung ist der zentrale Vorteil gegenüber einer sequentiellen Anordnung von Motor, Getriebe einschließlich Hauptlagerung und Gelenkmomentsensor.

Üblicherweise wird das komplette Robotergelenk einschließlich Hauptlagerung und Verzahnungen, d.h. Getrieben gemeinsam abgedichtet. Bei Robotergelenken mit integrierten Gelenkmomentsensoren resultiert daraus als wesentlicher Nachteil, dass der aufgrund der Dichtungsreibung entstehende Kraftnebenfluss die Messung der Drehmomente verfälschen kann.

Dieser Kraftnebenfluss kann zu einer Verschlechterung der Messgenauigkeit in einer Größenordnung von bis zu einigen Prozent vom Nennmoment führen. Ein besonderes Hauptaugenmerk in der Gelenkkonstruktion liegt erfindungsgemäß deshalb auf einer Reduzierung der Dichtungsreibung. Diese Fokussierung stellt einerseits einen zusätzlichen Kostenfaktor dar, wenn die Reibungsminimierung mit hochwertigen Materialien und/oder Beschichtungen erreicht werden soll, und andererseits besteht ein Zielkonflikt zwischen hoher Dichtwirkung und hoher Messgenauigkeit. Es kann eigentlich nicht beides gleichzeitig in idealer Weise erreicht werden.

Als Ziel der Erfindung kann deshalb die Realisierung einer Abdichtung eines Robotergelenks mit integrierten Gelenkmomentsensoren mit besserer Dichtwirkung, jedoch ohne dass die Momentmessung verfälscht wird, angesehen werden.

Eine Analyse der Krafthauptflüsse und Kraftnebenflüsse unter den möglichen Betriebsbedingungen hat erfindungsgemäß gezeigt, dass eine Verfälschung der Momentenmessung dadurch verhindert werden kann, dass man eine Abdichtung des Getriebes von einer Abdichtung der Hauptlagerung trennt.

Die Abdichtung des Getriebes kann erfindungsgemäß zwischen dem Getriebe und dem Gelenkmomentsensor angeordnet sein, beispielsweise direkt im Anschluss an einen Flex-Spline eines Spannungswellengetriebes. Die Abdichtung des Getriebes kann sich somit zwischen einem Hauptlager-Innenring und einem Innenflansch des Gelenkmomentsensors befinden. Eine vollständige Abdichtung des Getriebes kann damit erreicht werden. Typische Reibmomente von berührenden Dichtungen betragen ein bis zwei Prozent vom Nennmoment des Gelenkmomentsensors. Die Dichtung stellt hier jedoch keinen Kraftnebenfluss dar, der die Momentenmessung beeinflusst. Die Momentenmessung erfolgt im Kraftfluss erst nach der Dichtung des Getriebes. Das am Strukturteil des Roboterarms, d.h. an einem Glied des Roboterarms anliegende Drehmoment wird so vom Gelenkmomentsensor nahezu vollständig gemessen, lediglich abzüglich eines theoretischen Kraftnebenflusses des Hauptlagers.

Für eine Abdichtung der Hauptlagerung sind die Anforderungen im Vergleich zur Getriebedichtung jedoch deutlich geringer. Beispielsweise wird nur eine minimale d.h. geringere Fettmenge benötigt und die Fettkonsistenz kann auch eine geringere Viskosität aufweisen. Es kann sogar auf berührungslose Dichtungen, wie beispielsweise Abdeckscheiben zurückgegriffen werden, die nur einen minimalen Kraftnebenfluss darstellen und die Momentenmessung fast gar nicht beeinflussen. Der Kraftnebenfluss durch die Lagerreibung kann Prinzip bedingt zwar nicht verhindert werden. Diese Reibung kann jedoch deutlich minimiert sein. Maßgeblich ist vielmehr die Reibung der Dichtung.

Für sensitive Roboter ist eine Gelenkabdichtung bei gleichzeitiger hoher Messgenauigkeit der Momentenmessung somit von zentraler Bedeutung. Mit der erfindungsgemäßen Lösung von Dichtungsarten am Getriebe und getrennt davon eine andere Dichtungsart an der Hauptlagerung, wird eine vollwertige Abdichtung des Getriebes und damit des Gelenks erreicht, ohne dass die Momentenmessung nennenswert beeinflusst wird.

Die Hauptlageranordnung kann ein oder mehrere Wälzlager umfassen, die ausgebildet sind, das in der kinematischen Kette des Roboterarms bezüglich eines Gelenks nachgelagerte Glied verstellbar an einem diesem Gelenk vorgelagerten Glied zu lagern. Das Gelenk kann vorzugsweise ein Drehgelenk sein. Demgemäß kann die Hauptlageranordnung ausgebildet sein, das in der kinematischen Kette des Roboterarms bezüglich eines Gelenks nachgelagerte Glied drehbar an einem diesem Gelenk vorgelagerten Glied zu lagern. Aufgrund der Hauptlageranordnung wird zwischen dem nachgelagerten Glied und dem vorgelagerten Glied demgemäß ein Spalt gebildet, da die Verstellbarkeit des nachgelagerten Glieds bezüglich des vorgelagerten Glieds sichergestellt sein muss. Der Spalt wird insoweit von zwei gegenüberliegenden Stirnwänden des vorgelagerten Glieds und des nachgelagerten Glieds gebildet. Aufgrund der Hauptlageranordnung mit einem oder mehreren Wälzlagern, ist wenigstens ein Wälzlagerring mit dem vorgelagerten Glied verbunden und der andere Wälzlagerring desselben Wälzlagers mit dem nachgelagerten Glied verbunden. Demgemäß kann der erwähnte Spalt auch durch einen Innenring und einen Außenring eines Wälzlagers gebildet werden. Die berührungslose Dichtung kann somit insbesondere zwischen einem Innenring und einem Außenring eines Wälzlagers der Hauptlageranordnung angeordnet sein.

Das mittels der Hauptlageranordnung verstellbar gelagerte nachgelagerte Glied wird durch einen Motor, insbesondere einem elektrischen Motor angetrieben. Der Motor kann insbesondere in dem vorgelagerten Glied angeordnet sein. Der Motor erzeugt ein Antriebsmoment, das vorzugsweise über ein Getriebe auf das nachgelagerte Glied übertragen wird. Das Getriebe weist ein Getriebegehäuse auf. Da das Getriebe generell wenigstens eine Wälzpaarung umfasst, die geschmiert ausgebildet ist, dient das Getriebegehäuse unter anderem dazu, Fett und/oder Öl innerhalb des Getriebegehäuses einzuschließen. Kritisch ist dabei die Abdichtung von Spalten, insbesondere im Bereich eines Getriebegehäusedurchgangs sowohl an einem Eingangsglied des Getriebes als auch an einem Ausgangsglied des Getriebes. Diese Spalten zwischen dem Getriebegehäuse und dem Eingangsglied bzw. dem Ausgangsglied sind demgemäß mittels dynamischen Berührungsdichtungen schmiermitteldicht abgedichtet. Das Eingangsglied des Getriebes kann im Falle eines Spannungswellengetriebes Teil eines Wellengenerators des Spannungswellengetriebes sein. Das Ausgangsglied des Getriebes kann im Falle eines Spannungswellengetriebes Teil eines Flex-Spline des Spannungswellengetriebes sein.

Unter einer schmiermitteldichten Abdichtung wird insbesondere verstanden, dass je nach Art des Getriebes und dessen im Getriebe vorhandenen Schmiermittels, sei es Fett und/oder Öl, die dynamischen Berührungsdichtungen derart abdichten können, dass zumindest annähernd oder vollständig verhindert ist, dass Fett und/oder Öl aus den Spalten zwischen dem Getriebegehäuse und dem Eingangsglied bzw. dem Ausgangsglied austritt.

Das Ausgangsglied des Getriebes kann die Abtriebswelle des Getriebes bilden bzw. kann an diese angeschlossen sein. Beispielsweise im Falle eines Spannungswellengetriebes kann das Ausgangsglied bzw. die Abtriebswelle von einem Flex-Spline des Spannungswellengetriebes gebildet werden oder vorzugsweise unmittelbar mit diesem verbunden sein.

Der Gelenkmomentsensor umfasst den Eingangsflansch, den Ausgangsflansch und wenigstens einen, insbesondere mehrere Messabschnitte. An jedem Gelenk des Roboterarms kann wenigstens ein Gelenkmomentsensor vorhanden sein. Jeder Gelenkmomentsensor kann einen monolithischen Block aufweisen, der insoweit den Eingangsflansch, den Ausgangsflansch und den wenigstens einen, insbesondere die mehrere Messabschnitte umfassen kann. Der Eingangsflansch kann insbesondere von einem Innenringteil des Blocks gebildet werden, der Ausgangsflansch von einem Außenringteil des Blocks gebildet werden, wobei das Innenringteil und das Außenringteil über mehrere Speichenabschnitte verbunden sind. Die Speichenabschnitte sind Teile der Messabschnitte. Jeder Speichenabschnitt trägt wenigstens einen, insbesondere mehrere Messwertaufnehmer, wie beispielsweise Dehnmesstreifen (DMS). Der Gelenkmomentsensor kann beispielsweise analog der EP 1 353 159 B1 und der EP 1 503 196 A1 ausgebildet sein.

Der Kopplungsabschnitt bildet eine Drehmoment übertragende Verbindung zwischen dem Abtriebsglied des Getriebes und dem Eingangsflansch des Gelenkmomentsensors. Der Kopplungsabschnitt kann beispielsweise ein separates Bauteil sein, das einerseits mit dem Abtriebsglied des Getriebes und andererseits mit dem Eingangsflansch des Gelenkmomentsensors lösbar verbunden sein kann. Alternativ kann der Kopplungsabschnitt ein Teil des Abtriebsglieds des Getriebes sein bzw. einstückig mit dem Abtriebsglied des Getriebes ausgebildet sein. Wiederum alternativ kann der Kopplungsabschnitt ein Teil des Eingangsflansches des Gelenkmomentsensors sein bzw. einstückig mit dem Eingangsflansch des Gelenkmomentsensors ausgebildet sein.

Die das Getriebegehäuse schmiermitteldicht abdichtende dynamische Berührungsdichtung kann als wenigstens ein Radialwellendichtring ausgebildet sein.

Der Radialwellendichtring kann eine Dichtlippe oder mehrere Dichtlippen aufweisen, die an der Gegenlauffläche des Kopplungsabschnitts berührend anliegen. Statt einem einzigen Radialwellendichtring können auch zwei oder mehrere Radialwellendichtring vorgesehen sein.

In einer ersten Ausführungsvariante kann der Kopplungsabschnitt an der Abtriebswelle des Getriebes ausgebildet sein und die Gegenlauffläche, an der eine Dichtlippe des Radialwellendichtrings berührend anliegt, von einer Mantelwand der Abtriebswelle gebildet werden. Der Kopplungsabschnitt ist in dieser Ausführungsvariante ein Teilabschnitt der Abtriebswelle des Getriebes.

In einer zweiten Ausführungsvariante kann der Kopplungsabschnitt an dem Eingangsflansch des Gelenkmomentsensors ausgebildet sein und die Gegenlauffläche, an der eine Dichtlippe des Radialwellendichtrings berührend anliegt, von einer Mantelwand des Eingangsflansches des Gelenkmomentsensors gebildet werden. Der Kopplungsabschnitt ist in dieser Ausführungsvariante ein Teilabschnitt des Eingangsflansches des Gelenkmomentsensors.

In einer dritten Ausführungsvariante kann der Kopplungsabschnitt als ein separates Bauelement ausgebildet sein, das an dem Eingangsflansch des Gelenkmomentsensors und/oder an der Abtriebswelle des Getriebes befestigt ist und die Gegenlauffläche, an der eine Dichtlippe des Radialwellendichtrings berührend anliegt, von einer Mantelwand des separaten Bauelements gebildet werden. In dieser Ausführungsvariante kann der als separates Bauelement ausgebildete Kopplungsabschnitt beispielsweise mittels Schrauben einerseits an den Eingangsflansch des Gelenkmomentsensors und andererseits an die Abtriebswelle des Getriebes angeschraubt sein.

Die den Spalt zwischen dem vorgelagerten Glied und dem nachgelagerten Glied staubdicht abdichtende dynamische, berührungslose Dichtung kann als wenigstens eine Spaltdichtung oder Labyrinthdichtung ausgebildet sein. Die Spaltdichtung oder Labyrinthdichtung kann entweder zwischen einem Innenring eines Wälzlagers der Hauptlageranordnung und einem Außenring des Wälzlagers der Hauptlageranordnung angeordnet sein oder zwischen dem vorgelagerten Glied und dem nachgelagerten Glied des betreffenden Gelenks angeordnet sein.

Die den Spalt zwischen dem vorgelagerten Glied und dem nachgelagerten Glied insbesondere staubdicht abdichtende dynamische, berührungslose Dichtung kann als wenigstens eine Dichtscheibe der Hauptlageranordnung ausgebildet sein. Die wenigstens eine Dichtscheibe kann insbesondere zwischen einem Innenring eines Wälzlagers der Hauptlageranordnung und einem Außenring des Wälzlagers der Hauptlageranordnung angeordnet sein. Die Dichtscheibe kann insoweit Teil des Wälzlagers sein.

Der Roboterarm kann generell mehrere Motoren aufweisen, die jeweils ausgebildet sind, jeweils eines der Gelenke zu verstellen, indem der Motor mit seinem Motorgehäuse an einem dem jeweiligen Gelenk vorgelagerten Glied des Roboterarms festgelegt ist, wobei eine Motorwelle des Motors an ein Eingangsglied des Getriebes angekoppelt ist, das ein Ausgangsglied aufweist, welches an einem dem jeweiligen Gelenk nachgelagerten Glied des Roboterarms angekoppelt ist, indem das Ausgangsglied die Abtriebswelle des Getriebes bildet und über den Kopplungsabschnitt an den Eingangsflansch des Gelenkmomentsensors angekoppelt ist. Die Motoren können vorzugsweise elektrische Motoren sein. Der Roboterarm kann insbesondere an jedem seiner Gelenke eine erfindungsgemäße Dichtungsanordnung aufweisen.

Das jeweilige Getriebegehäuse kann bezüglich der Motorwelle mittels wenigstens einer weiteren dynamischen Berührungsdichtung schmiermitteldicht abgedichtet sein. Das Getriebe weist somit ein Getriebegehäuse auf. Da das Getriebe, wie bereits erwähnt, generell wenigstens eine Wälzpaarung umfasst, die geschmiert ausgebildet ist, dient das Getriebegehäuse unter anderem dazu, Fett und/oder Öl innerhalb des Getriebegehäuses einzuschließen. Kritisch ist dabei die Abdichtung von Spalten, insbesondere im Bereich eines Getriebegehäusedurchgangs sowohl an einem Eingangsglied des Getriebes als auch an einem Ausgangsglied des Getriebes. Diese Spalten zwischen dem Getriebegehäuse und dem Eingangsglied bzw. dem Ausgangsglied sind demgemäß mittels dynamischen Berührungsdichtungen schmiermitteldicht abgedichtet.

Unter einer schmiermitteldichten Abdichtung wird insbesondere verstanden, dass je nach Art des Getriebes und dessen im Getriebe vorhandenen Schmiermittels, sei es Fett und/oder Öl, die dynamischen Berührungsdichtungen derart abdichten können, dass zumindest annähernd oder vollständig verhindert ist, dass Fett und/oder Öl aus den Spalten zwischen dem Getriebegehäuse und dem Eingangsglied bzw. dem Ausgangsglied austritt.

Die wenigstens eine weitere dynamische Berührungsdichtung kann als ein weiterer Radialwellendichtring ausgebildet sein.

Der weitere Radialwellendichtring kann eine Dichtlippe oder mehrere Dichtlippen aufweisen, die an der Motorwelle berührend anliegen. Statt einem einzigen Radialwellendichtring können auch zwei oder mehrere Radialwellendichtring vorgesehen sein.

Es kann vorgesehen sein, dass das Getriebegehäuse ausschließlich mittels der dynamischen Berührungsdichtung, die an dem Kopplungsabschnitt anliegt, und der weiteren dynamischen Berührungsdichtung, die an der Motorwelle anliegt, dynamisch gegen Austreten von Schmierstoff, wie beispielsweise Fett und/oder Getriebeöl abgedichtet ist. Es kann vorgesehen sein, dass das Getriebegehäuse keine darüber hinausgehenden dynamischen Berührungsdichtungen aufweist.

Die dynamische, berührungslose Dichtung, welche den durch die Hauptlageranordnung bestimmten Spalt zwischen dem vorgelagerten Glied und dem nachgelagerten Glied, das der Ausgangsflansch des Gelenkmomentsensors angekoppelt ist, insbesondere staubdicht abgedichtet ist, kann die einzige den Spalt abdichtende Dichtung des betreffenden Gelenks sein.

Unabhängig davon, ob der jeweilige durch die Hauptlageranordnung bestimmte Spalt des betreffenden Gelenks des Roboterarms mittels einer einzigen dynamischen, berührungslosen Dichtung abgedichtet ist oder mittels zwei oder mehreren dynamischen, berührungslosen Dichtungen abgedichtet ist, wird ein erfindungsgemäßer Effekt gegebenenfalls auch schon dann in ausreichendem Maße erreicht, wenn zwar keine vollständig berührungslose Dichtung verwendet wird, sondern eine andere, gegebenenfalls in geringem Umfang doch berührend arbeitende Dichtung verwendet wird, die gegenüber einer allgemeinen Berührungsdichtung und insbesondere gegenüber einem bekannten Radialwellendichtring eine deutlich reduzierte Reibung aufweist. Eine deutliche Reduzierung ist im Speziellen dann gegeben, wenn die Reibung der Dichtung an der Hauptlageranordnung zwar höher ist, als eine dynamische, berührungslose Dichtung, aber dennoch die Reibung der Dichtung an der Hauptlageranordnung um mehr als 50 % geringer ist, als die am Getriebe verwendete, dem betreffenden Gelenk zugehörige Berührungsdichtung, wie beispielsweise einem bekannten Radialwellendichtring. Derartige Dichtungen werden mitunter auch als reibungsreduzierte Dichtungen bezeichnet. Solche Dichtungen können beispielsweise Dichtungen in Art einer Radialwellendichtrings sein, der dann aber ohne Schlauchfeder ausgebildet ist und somit deutlich weniger Druck auf die zugeordnete Welle aufweist. Gegebenenfalls kann die Dichtung auch als ein Filzring ausgebildet sein, der radialdrucklos die zugeordnete Welle annähernd bündig umgibt.

Die dynamische Berührungsdichtung, die an dem Kopplungsabschnitt anliegt, kann an einem ersten Tragring befestigt sein, der mit einem Innenring des Hauptlagers verbunden ist.

Der Ausgangsflansch des Gelenkmomentsensors kann an einem zweiten Tragring befestigt sein, der mit einem Außenring des Hauptlagers verbunden ist.

Ein konkretes Ausführungsbeispiel der Erfindung ist in der nachfolgenden Beschreibung unter Bezugnahme auf die beigefügten Figuren näher erläutert. Konkrete Merkmale dieses exemplarisches Ausführungsbeispiels können unabhängig davon, in welchem konkreten Zusammenhang sie erwähnt sind, gegebenenfalls auch einzeln oder in weiteren Kombinationen betrachtet, allgemeine Merkmale der Erfindung darstellen.

Es zeigen:
- Fig. 1: eine schematische Darstellung eines beispielhaften Roboterarms, der mehrere Glieder und Gelenke umfasst, und
- Fig. 2: eine Schnittdarstellung eines repräsentativen Gelenks des erfindungsgemäßen Roboterarms gemäß Fig. 1.

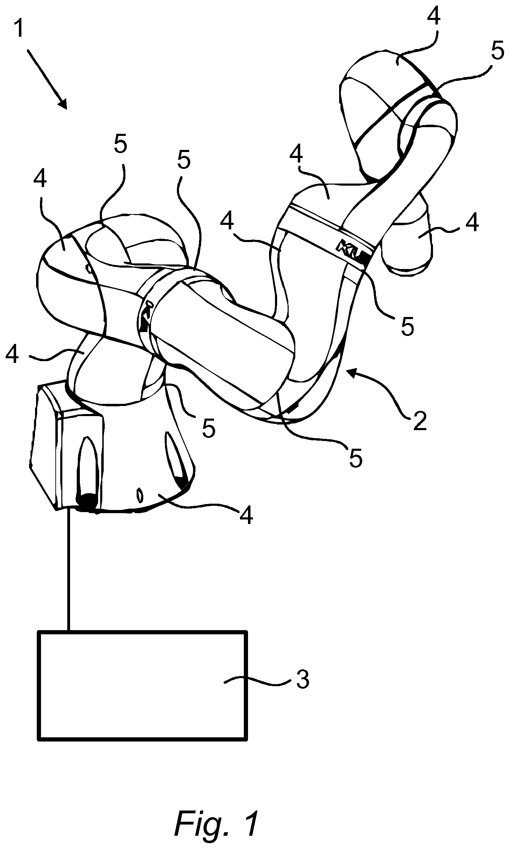

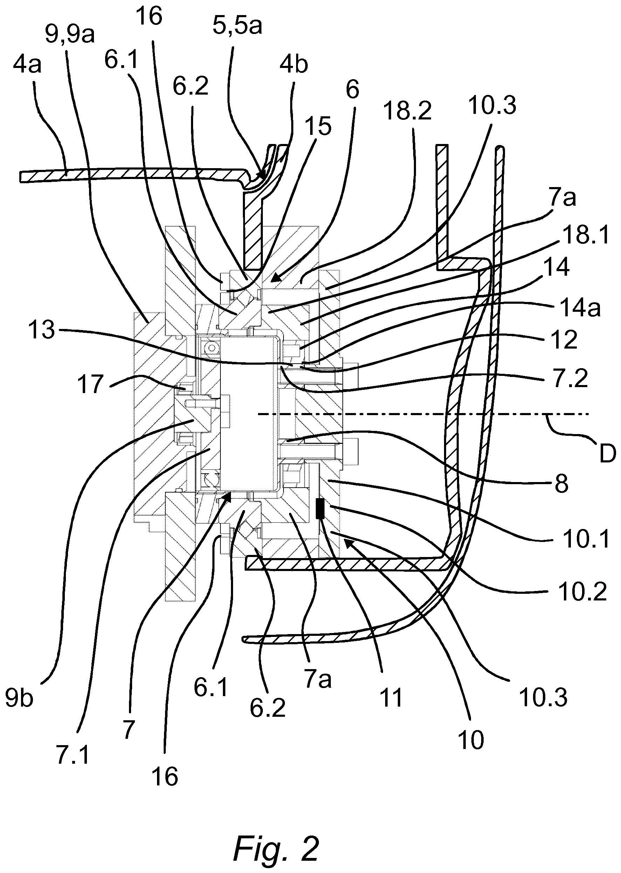

Im Falle des Ausführungsbeispiels der Fig. 1 weist ein Roboter 1 einen Roboterarm 2 mit einer zughörigen Robotersteuerung 3 auf. Der Roboterarm 2 weist mehrere Glieder 4 und die Glieder 4 gegeneinander verstellende Gelenke 5 auf. Jedes Gelenk 5 ist von jeweils einem Motor 9 (Fig. 2) des Roboterarms 2 angetrieben. Die Robotersteuerung 3 ist ausgebildet und eingerichtet, die Motoren 9 anzusteuern, um die Glieder 4 des Roboterarms 2 durch automatisches Verstellen der Gelenke 5 zu bewegen. Der Roboterarm 2 weist mindestens ein Gelenk 5 auf, das eine erfindungsgemäße Gelenksabdichtungsanordnung aufweist, die in Fig. 2 näher im Schnitt dargestellt ist. Im Falle des vorliegenden Ausführungsbeispiels sind alle Gelenke 5 des Roboterarms 2 als Drehgelenke 5a ausgebildet. Im Falle des vorliegenden Ausführungsbeispiels ist jedes Drehgelenk 5a um eine Drehachse D (Fig. 2) drehbar und weist eine erfindungsgemäße Gelenksabdichtungsanordnung auf.

Der Roboterarm 2 weist mehrere Motoren 9 auf, die jeweils ausgebildet sind, jeweils eines der Gelenke 5 zu verstellen, indem der Motor 9 mit seinem Motorgehäuse 9a an einem dem jeweiligen Gelenk 5 vorgelagerten Glied 4a des Roboterarms 2 festgelegt ist und eine Motorwelle 9b des Motors 9 an ein Eingangsglied 7.1 des Getriebes 7 angekoppelt ist, das ein Ausgangsglied 7.2 aufweist, welches an einem dem jeweiligen Gelenk 5 nachgelagerten Glied 4b des Roboterarms 2 angekoppelt ist, indem das Ausgangsglied 7.2 die Abtriebswelle 8 des Getriebes 7 bildet und über den Kopplungsabschnitt 12 an den Eingangsflansch 10.1 des Gelenkmomentsensors 10 angekoppelt ist.

Der Roboterarm 2 weist demgemäß mehrere Glieder 4 und mehrere Gelenke 5 auf, welche die Glieder 4 gegeneinander verstellbar verbinden, wobei jeweils ein nachgelagertes Glied 4b mittels einer Hauptlageranordnung 6 drehbar an einem vorgelagerten Glied 4a gelagert ist, ein Getriebegehäuse 7a eines jeweiligen Getriebes 7 in dem betreffenden Gelenk 5 an das nachgelagerte Glied 4b angekoppelt ist und an eine Abtriebswelle 8 des Getriebes 7 ein Gelenkmomentsensor 10 angeschlossen ist, der ausgebildet ist, ein Drehmoment abtriebsseitig zu erfassen, wobei der Gelenkmomentsensor 10 einen Eingangsflansch 10.1, einen Ausgangsflansch 10.3 und einen den Eingangsflansch 10.1 mit dem Ausgangsflansch 10.3 verbindenden Messabschnitt 10.2 aufweist, an dem wenigstens ein Drehmomentsensor-Messelement 11 angeordnet ist, des Weiteren aufweisend einen den Eingangsflansch 10.1 des Gelenkmomentsensors 10 an die Abtriebswelle 8 des Getriebes 7 ankoppelnden Kopplungsabschnitt 12, der eine Gegenlauffläche 13 aufweist, auf der eine das Getriebegehäuse 7a schmiermitteldicht abdichtende dynamische Berührungsdichtung 14 sitzt, wobei ein durch die Hauptlageranordnung 6 bestimmter Spalt 15 zwischen dem vorgelagerten Glied 4a und dem nachgelagerten Glied 4b, an das der Ausgangsflansch 10.3 des Gelenkmomentsensors 10 angekoppelt ist, mittels einer dynamischen, berührungslosen Dichtung 16 staubdicht abgedichtet ist.

Im Falle des vorliegenden Ausführungsbeispiels ist die das Getriebegehäuse 7a schmiermitteldicht abdichtende dynamische Berührungsdichtung 14 als wenigstens ein Radialwellendichtring ausgebildet.

Der Kopplungsabschnitt 12 ist an dem Eingangsflansch 10.1 des Gelenkmomentsensors 10 ausgebildet und die Gegenlauffläche 13, an der eine Dichtlippe 14a des Radialwellendichtrings berührend anliegt, wird von einer Mantelwand des Eingangsflansches 10.1 des Gelenkmomentsensors 10 gebildet.

Die den Spalt 15 zwischen dem vorgelagerten Glied 4a und dem nachgelagerten Glied 4b staubdicht abdichtende dynamische, berührungslose Dichtung 16 ist als wenigstens eine Spaltdichtung, Labyrinthdichtung oder insbesondere als wenigstens eine Dichtscheibe ausgebildet.

Im Falle des vorliegenden Ausführungsbeispiels ist das jeweilige Getriebegehäuse 7a bezüglich der Motorwelle 9b mittels wenigstens einer weiteren dynamischen Berührungsdichtung 17 schmiermitteldicht abgedichtet ist. Die wenigstens eine weitere dynamische Berührungsdichtung 17 ist Im Falle des vorliegenden Ausführungsbeispiels als ein weiterer Radialwellendichtring ausgebildet.

Das Getriebegehäuse 7a ist ausschließlich mittels der dynamischen Berührungsdichtung 14, die an dem Kopplungsabschnitt 12 anliegt, und der weiteren dynamischen Berührungsdichtung 17, die an der Motorwelle 9b anliegt, dynamisch gegen Austreten von Getriebeöl abgedichtet.

Die dynamische, berührungslose Dichtung 16, welche den durch die Hauptlageranordnung 6 bestimmten Spalt 15 zwischen dem vorgelagerten Glied 4a und dem nachgelagerten Glied 4b, an das der Ausgangsflansch 10.3 des Gelenkmomentsensors 10 angekoppelt ist, staubdicht abgedichtet ist, ist die einzige den Spalt 15 abdichtende Dichtung des betreffenden Gelenks 5.

Die dynamische Berührungsdichtung 14, die an dem Kopplungsabschnitt 12 anliegt, ist an einem ersten Tragring 18.1 befestigt, der mit einem Innenring 6.1 des Hauptlagers 6 verbunden ist.

Der Ausgangsflansch 10.3 des Gelenkmomentsensors 10 ist an einem zweiten Tragring 18.2 befestigt, der mit einem Außenring 6.2 des Hauptlagers 6 verbunden ist.

## Patentansprüche

1. Roboterarm, aufweisend mehrere Glieder (4) und mehrere Gelenke (5), welche die Glieder (4) gegeneinander verstellbar verbinden, wobei wenigstens ein nachgelagertes Glied (4b) mittels einer Hauptlageranordnung (6) drehbar an einem vorgelagerten Glied (4a) gelagert ist, ein Getriebegehäuse (7a) eines jeweiligen Getriebes (7) in dem betreffenden Gelenk (5) an das vorgelagerte Glied (4a) angekoppelt ist und an eine Abtriebswelle (8) des Getriebes (7) ein Gelenkmomentsensor (10) angeschlossen ist, der ausgebildet ist, ein Drehmoment abtriebsseitig zu erfassen, wobei der Gelenkmomentsensor (10) einen Eingangsflansch (10.1), einen Ausgangsflansch (10.3) und einen den Eingangsflansch (10.1) mit dem Ausgangsflansch (10.3) verbindenden Messabschnitt (10.2) aufweist, an dem wenigstens ein Drehmomentsensor-Messelement (11) angeordnet ist, **gekennzeichnet durch** eine getriebeabtriebsseitige Gegenlauffläche (13), auf der eine das Getriebegehäuse (7a) schmiermitteldicht abdichtende dynamische Berührungsdichtung (14) sitzt, wobei ein durch die Hauptlageranordnung (6) bestimmter Spalt (15) zwischen dem vorgelagerten Glied (4a) und dem nachgelagerten Glied (4b), an das der Ausgangsflansch (10.3) des Gelenkmomentsensors (10) angekoppelt ist, mittels einer weiteren dynamischen Dichtung (16) abgedichtet ist.

2. Roboterarm nach Anspruch 1, **gekennzeichnet durch** einen den Eingangsflansch (10.1) des Gelenkmomentsensors (10) an die Abtriebswelle (8) des Getriebes (7) ankoppelnden Kopplungsabschnitt (12), der eine Gegenlauffläche (13) aufweist, auf der eine das Getriebegehäuse (7a) schmiermitteldicht abdichtende dynamische Berührungsdichtung (14) sitzt, wobei ein durch die Hauptlageranordnung (6) bestimmter Spalt (15) zwischen dem vorgelagerten Glied (4a) und dem nachgelagerten Glied (4b), an das der Ausgangsflansch (10.3) des Gelenkmomentsensors (10) angekoppelt ist, mittels der weiteren dynamischen, insbesondere berührungslosen Dichtung (16) insbesondere staubdicht abgedichtet ist.

3. Roboterarm nach Anspruch 1 oder 2, **dadurch gekennzeichnet, dass** die das Getriebegehäuse (7a) schmiermitteldicht abdichtende dynamische Berührungsdichtung (14) als wenigstens ein Radialwellendichtring ausgebildet ist.

4. Roboterarm nach Anspruch 3, **dadurch gekennzeichnet, dass** der Kopplungsabschnitt (12) an der Abtriebswelle (8) des Getriebes (7) ausgebildet ist und die Gegenlauffläche (13), an der eine Dichtlippe (14a) des Radialwellendichtrings berührend anliegt, von einer Mantelwand der Abtriebswelle (8) gebildet wird.

5. Roboterarm nach Anspruch 3, **dadurch gekennzeichnet, dass** der Kopplungsabschnitt (12) an dem Eingangsflansch (10.1) des Gelenkmomentsensors (10) ausgebildet ist und die Gegenlauffläche (13), an der eine Dichtlippe (14a) des Radialwellendichtrings berührend anliegt, von einer Mantelwand des Eingangsflansches (10.1) des Gelenkmomentsensors (10) gebildet wird.

6. Roboterarm nach Anspruch 3, **dadurch gekennzeichnet, dass** der Kopplungsabschnitt (12) als ein separates Bauelement ausgebildet ist, das an dem Eingangsflansch (10.1) des Gelenkmomentsensors (10) und/oder an der Abtriebswelle (8) des Getriebes (7) befestigt ist und die Gegenlauffläche (13), an der eine Dichtlippe (14a) des Radialwellendichtrings berührend anliegt, von einer Mantelwand des separaten Bauelements gebildet wird.

7. Roboterarm nach einem der Ansprüche 1 bis 6, **dadurch gekennzeichnet, dass** die den Spalt (15) zwischen dem vorgelagerten Glied (4a) und dem nachgelagerten Glied (4b) staubdicht abdichtende dynamische, berührungslose Dichtung (16) als wenigstens eine Spaltdichtung oder Labyrinthdichtung ausgebildet ist.

8. Roboterarm nach einem der Ansprüche 1 bis 7, **dadurch gekennzeichnet, dass** die den Spalt (15) zwischen dem vorgelagerten Glied (4a) und dem nachgelagerten Glied (4b) staubdicht abdichtende dynamische, berührungslose Dichtung (16) als wenigstens eine Dichtscheibe der Hauptlageranordnung ausgebildet ist.

9. Roboterarm nach einem der Ansprüche 1 bis 8, **dadurch gekennzeichnet, dass** der Roboterarm (2) mehrere Motoren (9) aufweist, die jeweils ausgebildet sind, jeweils eines der Gelenke (5) zu verstellen, indem der Motor (9) mit seinem Motorgehäuse (9a) an einem dem jeweiligen Gelenk (5) vorgelagerten Glied (4a) des Roboterarms (2) festgelegt ist und eine Motorwelle (9b) des Motors (9) an ein Eingangsglied (7.1) des Getriebes (7) angekoppelt ist, das ein Ausgangsglied (7.2) aufweist, welches an einem dem jeweiligen Gelenk (5) nachgelagerten Glied (4b) des Roboterarms (2) angekoppelt ist, indem das Ausgangsglied (7.2) die Abtriebswelle (8) des Getriebes (7) bildet und über den Kopplungsabschnitt (12) an den Eingangsflansch (10.1) des Gelenkmomentsensors (10) angekoppelt ist.

10. Roboterarm nach Anspruch 9, **dadurch gekennzeichnet, dass** das jeweilige Getriebegehäuse (7a) bezüglich der Motorwelle (9b) mittels wenigstens einer weiteren dynamischen Berührungsdichtung (17) schmiermitteldicht abgedichtet ist.

11. Roboterarm nach Anspruch 10, **dadurch gekennzeichnet, dass** die wenigstens eine weitere dynamische Berührungsdichtung (17) als ein weiterer Radialwellendichtring ausgebildet ist.

12. Roboterarm nach Anspruch 10 oder 11, **dadurch gekennzeichnet, dass** das Getriebegehäuse (7a) ausschließlich mittels der dynamischen Berührungsdichtung (14), die an dem Kopplungsabschnitt (12) anliegt, und der weiteren dynamischen Berührungsdichtung (17), die an der Motorwelle (9b) anliegt, dynamisch gegen Austreten von Getriebeöl abgedichtet ist.

13. Roboterarm nach einem der Ansprüche 1 bis 12, **dadurch gekennzeichnet, dass** die dynamische, berührungslose Dichtung (14), welche den durch die Hauptlageranordnung (6) bestimmten Spalt (15) zwischen dem vorgelagerten Glied (4a) und dem nachgelagerten Glied (4b), an das der Ausgangsflansch (10.3) des Gelenkmomentsensors (10) angekoppelt ist, staubdicht abgedichtet ist, die einzige den Spalt (15) abdichtende Dichtung des betreffenden Gelenks (5) ist.

14. Roboterarm nach einem der Ansprüche 1 bis 13, **dadurch gekennzeichnet, dass** die dynamische Berührungsdichtung (14) , die an dem Kopplungsabschnitt (12) anliegt, an einem ersten Tragring (18.1) befestigt ist, der mit einem Innenring (6.1) des Hauptlagers (6) verbunden ist.

15. Roboterarm nach einem der Ansprüche 1 bis 14, **dadurch gekennzeichnet, dass** der Ausgangsflansch (10.3) des Gelenkmomentsensors (10) an einem zweiten Tragring (18.2) befestigt ist, der mit einem Außenring (6.2) des Hauptlagers (6) verbunden ist.

## Claims

1. Robotic arm having a plurality of links (4) and a plurality of joints (5) which connect the links (4) so that they can be adjusted relative to one another, with at least one downstream link (4b) being rotatably mounted on an upstream link (4a) by means of a main bearing arrangement (6). a gear housing (7a) of a respective gear (7) is coupled to the upstream link (4a) in the relevant joint (5) and a joint torque sensor (10) is connected to an output shaft (8) of the gear (7). is connected, which is designed to detect a torque on the output side, the joint torque sensor (10) having an input flange (10.1), an output flange (10.3) and a measuring section (10.2) connecting the input flange (10.1) to the output flange (10.3), on which at least one torque sensor measuring element (11) is arranged, **characterized by** a counter surface (13) on the transmission output side, on which a dynamic bearing sealing the transmission housing (7a) in a lubricant-tight manner contact seal (14) is seated, with a gap (15) determined by the main bearing arrangement (6) between the upstream member (4a) and the downstream member (4b) to which the output flange (10.3) of the joint torque sensor (10) is coupled, is sealed by means of a further dynamic seal (16).

2. Robot arm according to Claim 1, **characterized by** a coupling section (12) which couples the input flange (10.1) of the joint torque sensor (10) to the output shaft (8) of the gear (7) and has a counter-surface (13) on which the gear housing (7a ) Lubricant-tight sealing dynamic contact seal (14) is seated, with a gap (15) determined by the main bearing arrangement (6) between the upstream member (4a) and the downstream member (4b) to which the output flange (10.3) of the Joint torque sensor (10) is coupled, by means of the further dynamic, in particular non-contact seal (16) is sealed in particular dust-tight.

3. Robot arm according to Claim 1 or 2, **characterized in that** the dynamic contact seal (14) which seals the gear housing (7a) in a lubricant-tight manner is designed as at least one radial shaft sealing ring.

4. Robot arm according to Claim 3, **characterized in that** the coupling section (12) is formed on the output shaft (8) of the gear (7) and the counter surface (13), on which a sealing lip (14a) of the radial shaft seal rests in contact, is formed by a Casing wall of the output shaft (8) is formed.

5. Robot arm according to Claim 3, **characterized in that** the coupling section (12) is formed on the input flange (10.1) of the joint torque sensor (10) and the mating surface (13), on which a sealing lip (14a) of the radial shaft seal rests in contact, from a casing wall of the Input flange (10.1) of the joint torque sensor (10) is formed.

6. Robot arm according to Claim 3, **characterized in that** the coupling section (12) is designed as a separate component which is attached to the input flange (10.1) of the joint torque sensor (10) and/or to the output shaft (8) of the gear (7) and the mating surface (13), on which a sealing lip (14a) of the radial shaft seal rests in contact, is formed by a casing wall of the separate component.

7. Robot arm according to one of Claims 1 to 6, **characterized in that** the dynamic, non-contact seal (16) sealing the gap (15) between the upstream member (4a) and the downstream member (4b) in a dust-tight manner as at least a gap seal or labyrinth seal is formed.

8. Robot arm according to one of Claims 1 to 7, **characterized in that** the dynamic, non-contact seal (16) sealing the gap (15) between the upstream member (4a) and the downstream member (4b) in a dust-tight manner as at least a sealing disk of the main bearing arrangement is formed.

9. Robot arm according to one of Claims 1 to 8, **characterized in that** the robot arm (2) has a plurality of motors (9) which are each designed to adjust one of the joints (5) **in that** the motor (9) is fixed with its motor housing (9a) to a link (4a) of the robot arm (2) located in front of the respective joint (5) and a motor shaft (9b) of the motor (9) to an input link (7.1) of the gear (7) is coupled, which has an output member (7.2), which is coupled to a member (4b) of the robot arm (2) downstream of the respective joint (5), **in that** the output member (7.2) drives the output shaft (8) of the gear (7 ) and is coupled via the coupling section (12) to the input flange (10.1) of the joint torque sensor (10).

10. Robot arm according to Claim 9, **characterized in that** the respective gear housing (7a) is sealed off in a lubricant-tight manner with respect to the motor shaft (9b) by means of at least one further dynamic contact seal (17).

11. Robot arm according to Claim 10, **characterized in that** the at least one further dynamic contact seal (17) is designed as a further radial shaft sealing ring.

12. Robotic arm according to claim 10 or 11, **characterized in that** the gear housing (7a) is secured exclusively by means of the dynamic contact seal (14) which abuts the coupling section (12) and the further dynamic contact seal (17) which is attached to the motor shaft (9b) is in contact, is dynamically sealed against the escape of gear oil.

13. Robotic arm according to any one of claims 1 to 12, **characterized in that** the dynamic non-contact seal (14) which closes the gap (15) determined by the main bearing arrangement (6) between the upstream link (4a) and the downstream link (4b), to which the output flange (10.3) of the joint torque sensor (10) is coupled, is sealed dust-tight, is the only seal of the relevant joint (5) that seals the gap (15).

14. Robotic arm according to any one of claims 1 to 13, **characterized in that** the dynamic contact seal (14) which abuts the coupling portion (12) is fixed to a first support ring (18.1) which is connected to an inner ring (6.1) of the main bearing (6) is connected.

15. Robot arm according to one of Claims 1 to 14, **characterized in that** the output flange (10.3) of the joint torque sensor (10) is attached to a second support ring (18.2) which is connected to an outer ring (6.2) of the main bearing (6).

## Revendications

1. Bras robotique ayant une pluralité de liaisons (4) et une pluralité de joints (5) qui relient les liaisons (4) de manière à ce qu'elles puissent être ajustées les unes par rapport aux autres, au moins une liaison en aval (4b) étant montée en rotation sur une liaison amont (4a) au moyen d'une disposition de roulement principal (6). un boîtier d'engrenage (7a) d'un engrenage respectif (7) est couplé à la liaison amont (4a) dans le joint concerné (5) et un capteur de couple de joint (10) est connecté à un arbre de sortie (8) de l'engrenage (7). est connecté, qui est conçu pour détecter un couple du côté de sortie, le capteur de couple de joint (10) ayant une bride d'entrée (10.1), une bride de sortie (10.3) et une section de mesure (10.2) reliant la bride d'entrée (10.1) à la bride de sortie (10.3), sur laquelle au moins un élément de mesure de capteur de couple (11) est disposé, **caractérisé par** une contre-surface (13) du côté de la sortie de transmission, sur lequel est installé un roulement dynamique scellant le boîtier de transmission (7a) de manière étanche au lubrifiant ( joint de contact (14), avec un espace (15) déterminé par la disposition du roulement principal (6) entre l'élément amont (4a) et l'élément aval (4b) auquel est couplée la bride de sortie (10.3) du capteur de couple commun (10), est scellé au moyen d'un joint dynamique supplémentaire (16).

2. Bras robotisé selon la revendication 1, **caractérisé par** une section d'accouplement (12) qui couple la bride d'entrée (10.1) du capteur de couple commun (10) à l'arbre de sortie (8) de l'engrenage (7) et présente une contre-surface (13) sur laquelle est assis le boîtier d'engrenage (7a) Joint de contact dynamique étanche au lubrifiant (14), avec un espace (15) déterminé par la disposition du roulement principal (6) entre l'élément amont (4a) et l'élément aval (4b) auquel est assis la bride de sortie (10.3) du capteur de couple Joint (10) est couplée, au moyen de la dynamique supplémentaire, en particulier le joint sans contact (16) est scellé en particulier étanche à la poussière.

3. Bras de robot selon la revendication 1 ou 2, **caractérisé en ce que** le joint de contact dynamique (14) qui scelle le boîtier d'engrenage (7a) de manière étanche au lubrifiant est conçu comme au moins une bague d'étanchéité radiale d'arbre.

4. Bras robotisé selon la revendication 3, **caractérisé en ce que** la section d'accouplement (12) est formée sur l'arbre de sortie (8) de l'engrenage (7) et la contre-surface (13), sur laquelle repose une lèvre d'étanchéité (14a) du joint radial de l'arbre, est formée par une paroi de boîtier de l'arbre de sortie (8) est formée.

5. Bras robotisé selon la revendication 3, **caractérisé en ce que** la section d'accouplement (12) est formée sur la bride d'entrée (10.1) du capteur de couple articulaire (10) et la surface d'accouplement (13), sur laquelle repose en contact une lèvre d'étanchéité (14a) du joint radial de l'arbre, à partir d'une paroi de boîtier de la bride d'entrée (10.1) du capteur de couple articulaire (10).

6. Bras robotisé selon la revendication 3, **caractérisé en ce que** la section d'accouplement (12) est conçue comme un composant séparé qui est fixé à la bride d'entrée (10.1) du capteur de couple de joint (10) et/ou à l'arbre de sortie (8) de l'engrenage (7) et à la surface d'accouplement (13), sur laquelle repose une lèvre d'étanchéité (14a) du joint radial de l'arbre, est formé par une paroi de boîtier du composant séparé.

7. Bras robotisé selon l'une des revendications 1 à 6, **caractérisé en ce que** le joint dynamique sans contact (16) scellant l'espace (15) entre l'élément amont (4a) et l'élément aval (4b) de manière étanche à la poussière comme au moins un joint d'étanchéité à l'espace ou un joint labyrinthe est formé.

8. Bras robotisé selon l'une des revendications 1 à 7, **caractérisé en ce que** le joint dynamique sans contact (16) scellant l'espace (15) entre l'élément amont (4a) et l'élément aval (4b) de manière étanche à la poussière comme au moins un disque d'étanchéité de la disposition principale du roulement est formé.

9. Bras de robot selon l'une des revendications 1 à 8, **caractérisé en ce que** le bras de robot (2) possède une pluralité de moteurs (9) qui sont chacun conçus pour ajuster l'un des joints (5) **en ce que** le moteur (9) est fixé avec son carter moteur (9a) à une liaison (4a) du bras robot (2) situé devant le joint respectif (5) et un arbre moteur (9b) du moteur (9) à une entrée La liaison (7.1) de l'engrenage (7) est couplée, qui a un élément de sortie (7.2), qui est couplé à un élément (4b) du bras du robot (2) en aval du joint respectif (5), en ce sens que l'élément de sortie (7.2) entraîne l'arbre de sortie (8) de l'engrenage (7 ) et est couplé via la section d'accouplement (12) à la bride d'entrée (10.1) du capteur de couple de joint (10).

10. Bras de robot selon la revendication 9, **caractérisé en ce que** le boîtier d'engrenage respectif (7a) est scellé de manière étanche au lubrifiant par rapport à l'arbre du moteur (9b) au moyen d'au moins un autre joint de contact dynamique (17).

11. Bras de robot selon la revendication 10, **caractérisé en ce que** l'au moins un autre joint de contact dynamique (17) est conçu comme une autre bague d'étanchéité radiale de l'arbre.

12. Bras robotique selon la revendication 10 ou 11, **caractérisé en ce que** le boîtier d'engrenage (7a) est fixé exclusivement au moyen du joint de contact dynamique (14) qui jouxte la section d'accouplement (12) et que le joint de contact dynamique supplémentaire (17) qui est fixé à l'arbre du moteur (9b) est en contact, est scellé dynamiquement contre la fuite d'huile pour engrenages.

13. Bras robotique selon l'une quelconque des revendications 1 à 12, **caractérisé en ce que** le joint dynamique sans contact (14) qui comble l'écart (15) déterminé par la disposition du roulement principal (6) entre la liaison amont (4a) et la liaison aval (4b), à laquelle est couplée la bride de sortie (10.3) du capteur de couple commun (10), est étanche à la poussière, est le seul joint du joint pertinent (5) qui scelle l'espace (15) .

14. Bras robotique selon l'une quelconque des revendications 1 à 13, **caractérisé en ce que** le joint de contact dynamique (14) qui jouxte la partie d'accouplement (12) est fixé à une première bague de support (18.1) qui est reliée à une bague intérieure (6.1) du roulement principal (6) est raccordée.

15. Bras de robot selon l'une des revendications 1 à 14, **caractérisé en ce que** la bride de sortie (10.3) du capteur de couple commun (10) est fixée à une seconde bague de support (18.2) qui est reliée à une bague extérieure (6.2) du roulement principal (6).
